# EUROPÄISCHE PATENTSCHRIFT

(11) **EP 0 418 322 B1**
(45) Veröffentlichungstag und Bekanntmachung des Hinweises auf die Patenterteilung: **07.12.1994**
(21) Anmeldenummer: 89907657.4
(22) Anmeldetag: 18.07.1989
(51) Int. Cl.: H04Q 9/00

(54) **ADRESSIERANORDNUNG**
AN ADDRESSING DEVICE
AGENCEMENT D'ADRESSAGE

(30) Priorität: 27.07.1988 CH 2846/88
(43) Veröffentlichungstag der Anmeldung: 27.03.1991
(73) Patentinhaber: VOCKENHUBER, Peter, CH-1427 Bonvillars (CH)
(72) Erfinder: VOCKENHUBER, Peter, CH-1427 Bonvillars (CH)
(74) Vertreter: Kügele, Bernhard
(86) Internationale Anmeldenummer: CH8900134
(87) Internationale Veröffentlichungsnummer: WO9001245

(56) Entgegenhaltungen:
- EP-A- 0 035 277
- EP-A- 0 088 067
- FR-A- 2 214 385

## Beschreibung

Die Erfindung bezieht sich auf eine Adressieranordnung nach dem Oberbegriff des Anspruches 1.

Adressieranordnungen solcher Art werden für die verschiedensten Zwecke eingesetzt. Ein Beispiel dafür beschreibt die DE-A-28 00 185, bei der das Kabel mit Thermistoren zum Erkennen von Leckagen von Fernwärmeleitungen bestückt ist. Selbstverständlich ist jedoch die vorliegende Erfindung keineswegs auf eine solche Anwendung beschränkt, sondern kann überall dort eingesetzt werden, wo mehrere Schaltstellen anzuwählen sind.

Für einen solchen Zweck ist es aus US-A-4 162 484 bekannt, die Schaltstellen über einen Code anzuwählen. Dies erfordert natürlich einen entsprechenden Schaltungsaufwand zur Codierung und Dekodierung der Adressen. Zwar wird durch die EP-A-0 043 431 bereits eine vereinfachte Schaltung beschrieben, bei der der Code einfach aus einer vorbestimmten Anzahl von Taktsignalen besteht; Immerhin ist jedoch auch dazu eine entsprechende Auswahl der abgegebenen Taktsignale und eine Vorrichtung zu deren Dekodierung nötig.

Ferner ist aus EP-A-0 035 277 ein Übertragungssystem zum adressenlosen Anschliessen mehrerer Teilnehmer an eine Zentrale bekannt.

Der Erfindung liegt nun die Aufgabe zugrunde, den Schaltungsaufwand bei gleicher Funktionalität zu verringern.

In einem ersten Schritt basiert die Erfindung auf der Erkenntnis, dass eine gewisse Codierung bereits in der Kabellänge selbst enthalten ist, denn wenn die einzelnen Schaltstellen längs eines Kabels verteilt sind, so lässt sich jeder Schaltstelle eine gewisse Kabellänge - gerechnet vom Adressiergenerator aus - zuordnen. Ausgehend von dieser Erkenntnis löst die Erfindung die obige Aufgabe durch die kennzeichnenden Merkmale des Anspruchs 1.

Dadurch, dass nun für alle Schaltstellen ein Standardsignal verwendet werden kann, erübrigt sich eine besondere Codierung, da sich diese auf Grund der im Anspruch 1 genannten Massnahmen aus der Kabellänge von selbst ergibt, indem eine Adresse nach der anderen automatisch angewählt wird. Aber auch auf der Seite der Dekodierung ergibt sich eine wesentliche Vereinfachung, weil nun der Adressierdetektor in jeder Schaltstelle gleich sein kann, wodurch sich die Herstellung vereinfacht und verbilligt.

Durch das Anwählen der verschiedenen Schaltstellen kann dabei eine Information über den Informationsleiter entweder von der Schaltstelle zu einer Zentralstelle, etwa einer Steuer- und Messzentrale, gesandt werden, wie dies in den oben genannten Schriften der Fall ist, oder es kann Information an die verschiedenen Schaltstellen ausgegeben werden. Beispielsweise kann ein Strom übertragen werden, dessen Stromstärke der zu übertragenden Information entspricht. Im Falle von Messungen handelt es sich um die Erfassung von physikalischer Grössen, die am Ort der Schaltstelle erfasst und zur Zentrale weitergeleitet werden können. Im Falle einer allgemeinen Informationseingabe werden die am Ort der Schaltstelle vorliegenden Informationen zum Ort der Steuer- und Messzentrale geleitet. Die Art der der Informationsgewinnung Zugrundeliegenden Messung oder Erfassung kann dabei beliebig sein, und wenn in der folgenden Beschreibung beispielshalber Temperatursensoren erwähnt werden, so ist doch die Erfindung keineswegs darauf beschränkt.

Im Übrigen kann es sich als vorteilhaft erweisen, digital oder analog vorliegende Informationen durch Modulation eines hochfrequenten Trägersignales zu übertragen.

Eine weitere Vereinfachung der Anordnung ergibt sich durch die Massnahmen nach Anspruch 2.

Das Standardsignal braucht nicht unbedingt gleichförmige Parameter zu bezitzen, vielmehr ist es vorteilhaft, wenn der Adressiergenerator im Sinne des Anspruchs 4 ausgebildet ist, weil dadurch die Adressiergenauigkeit bzw. -sicherheit verbessert wird. Es wird nämlich dadurch sichergestellt, dass jeweils alleine die nächste aktive Adresse angewählt wird.

Der Sicherheit dient auch die Massnahme nach Anspruch 5, da dadurch Fehler vermieden werden können. Weiter wird durch das in der Massnahme nach Anspruch 5 beschiebene Reset- Glied das Überführen aller Schaltstellen 14 in die Normalstellung, die als Ausgangsstellung für die Einleitung eines Adressierzyklus' dient, bewirkt.

Die Massnahme nach Anspruch 6 stellt sicher, dass durch eine erfindungsgemässe Anordnung noch Schaltstellen adressiert werden können, deren Abstand voneinander sonst wegen mangelnder Impedanz der dazwischenliegenden Kabellänge zu gering wäre, um den zur Erkennung herangezogenen Parameter des Standardsignales zwischen der ersten, der Steuer- und Messzentrale am nächsten gelegenen Schalstelle 14 mit geschlossener Schaltstufe 8, und der nächstfolgenden Schaltstelle ausreichend stark abzuschwächen, um ein gleichzeitiges Ansprechen der beiden zu verhindern. Diese Massnahme ist selbstverständlich unabhängig von der gewählten Art der Adressierung zur Verkürzung der minimalen, zwischen zwei Schaltstellen erforderlichen Kabellänge, und/oder zur Verbesserung der Adressiergenauigkeit bzw. -sicherheit möglich.

Die Massnahmen nach Anspruch 10 gestatten eine Kaskadierung einer Adressieranordnung, wodurch eine grosse Anzahl an Schaltstellen zu einer einzigen Anordnung zusammenfassbar sind.

Weitere Einzelheiten der Erfindung ergeben sich an Hand der nachfolgenden Beschreibung von in den Zeichnungen schematisch dargestellten Ausfühungsbeispielen. Es zeigen:
Fig. 1 den Gesamtüberblick einer erfindungsgemässen Anordnung;
Fig. 2 eine bevorzugte Ausführungsform einer Zelle der erfindungsgemässen Anordnung zur Informationseingabe bzw. zum Messen;
Fig. 3 eine bevorzugte Ausführungsform einer Zelle für die Informationsausgabe bzw. zum Steuern;
Fig. 4 die Kaskadierung von erfindungsgemässen Anordnungen;
Fig. 5 eine Ausführungsform der Steuer- und Messzentrale und
Fig. 6 eine gemischte Ausführungsform einer erfindungsgemässen Anordnung mit Informationsein- und -ausgabe auf einem Kabel zum kombinierten Messen und Steuern.
Fig. 7a - d zeigen Ausführungsarten der Erfindung, und
Fig. 8 zeigt ein Signaldiagramm.

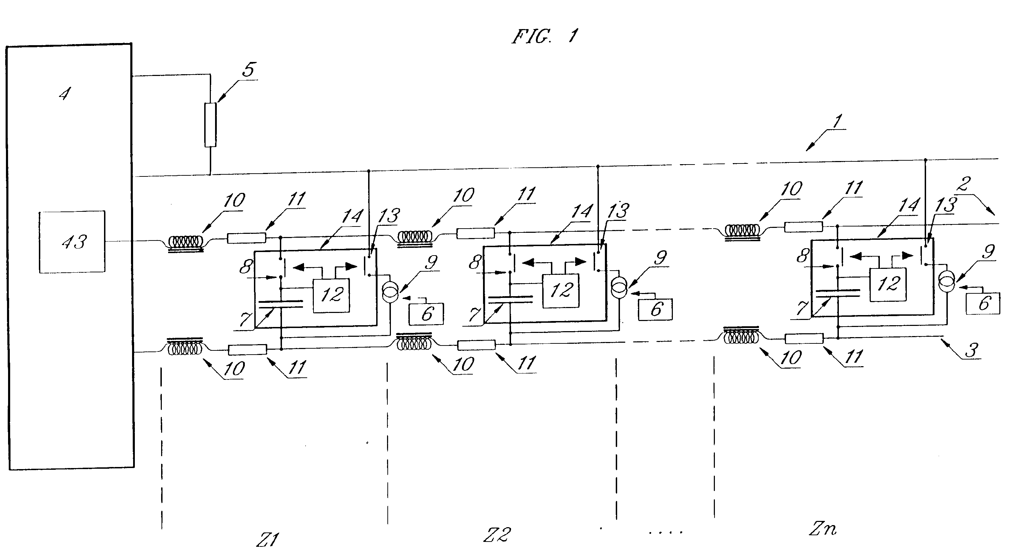

In Fig. 1 ist eine typische Anwendung der erfindungsgemässen Anordnung dargestellt. Es handelt sich um eine Temperatur-Messanordnung längs einer, durch das Kabel festgelegten Linie. Wie man der Darstellung entnehmen kann, weist das Kabel drei Adern auf, nämlich einen Informationssignalleiter 1, einen Adressenleiter 2, der zugleich der Versorgungsleiter der Anordnung ist, sowie einen zugehörigen Masseleiter 3.

Es handelt sich hier um eine, in bestimmten Anwendungsfällen besonders vorteilhafte Ausführungsform der Erfindung, da man mit nur drei Adern des Kabels das Auslangen finden kann. Dies ermöglicht es, die Herstellkosten besonders niedrig zu halten.

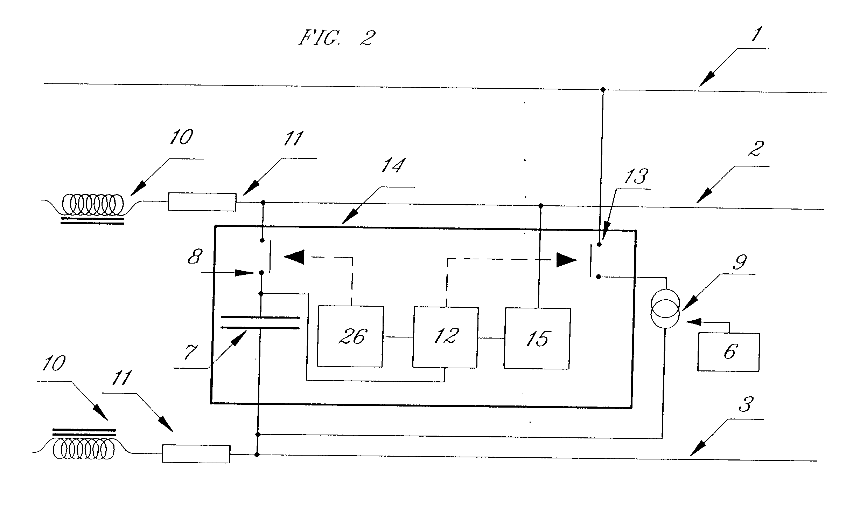

Wie aus den Fig. 1 und 2 ersichtlich, besteht die Anordnung aus dem erwähnten drei-ädrigen Kabel und einer Steuer- und Messzentrale 4, die einerseits das Standard- Adressensignal erzeugt, und andrerseits die, von den Schaltstufen 13 geschalteten Stromquellen 9, deren Signale durch den Informationssignalleiter 1 übertragen werden, einliest, um dann die erhaltenen Temperatur- Profile weiterzuverarbeiten.

In dem, in den Fig. 1 und 2 dargestellten Anwendungsbeispiel der Erfindung wird die Informationsübertragung mittels Stromquellen 9 vorgenommen die von den Temperatursensoren 6 gesteuert werden.

Bei den Sensoren kann es sich zum Beispiel um Sonden LM35 der Firma National Semiconductor handeln. Diese können, wie im entsprechenden Handbuch (National Semiconductor Corporation 1984 Linear Supplement Databook Seite S 8-6) beschrieben, eine Stromquelle ansteuern, deren Strom schliesslich der durch die Sonde gemessenen Temperatur proportional ist. Auf derselben Seite des zitierten Handbuchs findet sich auch die Beschreibung der Signalübertragung des Sensorsignales in Form einer Spannung über ein Kabel mit verdrillten Adern. Diese Form von Informationseingabeeinheit und Informationssignalübertragung kann ohne weiteres im Zusammenhang mit einer erfindungsgemässen Anordnung realisiert werden.

Der Vorteil der Signalübertragung in Form eines Stromsignales besteht darin, dass der Widerstand des Kabels selbst die Übertragung des Messwertes nicht beeinflussen kann. In diesem Falle ist es beispielsweise vorteilhaft, eine Temperatursonde mit integrierter steuerbarer Stromquelle in einer erfindungsgemässen Anordnung einzusetzen, wie sie etwa von der Firma Analog Devices (AD 590) angeboten wird.

Die zentrale Steuer- und Messzentrale 4 ordnet anschliessend die an einem Messwiderstand 5 abfallende Spannung, die dem Strom, und somit der Temperatur proportional ist, derjenigen Zelle zu, deren Zustand gemäss der Vorgeschichte der Messung aktiv ist.

Die Steuer- und Messzentrale 4 geht dabei vorzugsweise gemäss den zwei, im folgenden beschriebenen Zyklen vor:

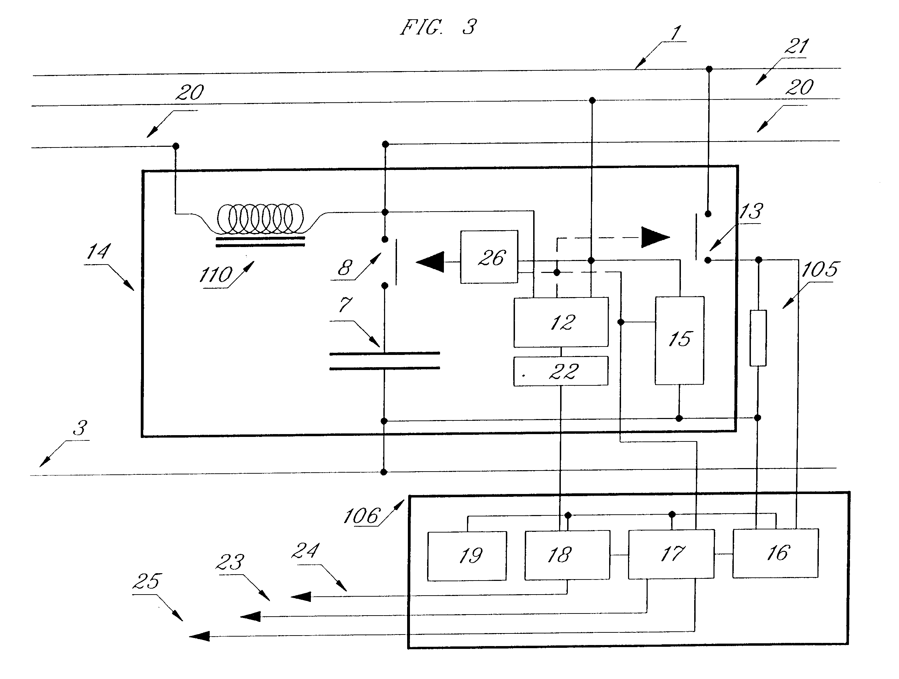

Zuerst wird die Versorgungsspannung zwischen dem kombinierten Adressen- und Versorgungsleitern 2 und 3 auf Null gesetzt, und anschliessend auf einen festgesetzten Nominalwert hochgefahren. Dies bewirkt gemäss einer, in jeder Schaltstelle 14 vorhandenen Reset- Schaltung 15 (Fig.3), dass alle Schaltstellen 14 in einen definierten Zustand gebracht werden, in dem die Schaltstufen 8 geschlossen, und die Schaltstufen 13 offen sind.

Dies hat zur Folge, dass alle Kondensatoren 7, die das Impedanzglied des Beispiels darstellen, geladen werden. Ihre Entladung kann anschliessend dazu herangezogen werden, die Zeit zu bestimmen, während der die Information über den Informationssignalleiter 1 übertragen wird.

In den Fig. ist die Impedanz des Kabels symbolisch in Form einer Spule 10 für die Induktivität und eines Widerstands 11 für den Ohm'schen Anteil der Impedanz der kombinierten Versorgung- und Adressenleiter 2 und für den Masseleiter 3 dargestellt. Ein etwaiger kapazitiver Anteil kann auch vorhanden sein, ist jedoch nicht dargestellt.

Weiter ist in Fig. 1 und 2 von einem kombinierten Versorgungs- und Adressenleiter 2 auszugehen, der in anderen Beispielen in einen Versorgunsgleiter 21 und einen eigenen Adressenleiter 20 geteilt ist. Um keine Verwechslung aufkommen zu lassen, wurde der kombinierte Versorgungsleiter mit 2 bezeichnet, und in allen Fällen, in denen die Funktionen der Versorgung und der Adressierung durch getrennte Leiter verwirklicht werden, werden die Bezeichnungen 21 und 20 verwendet.

Wie man der Fig. entnehmen kann, ist die Impedanz des Kabels, von der Steuer- und Messzentrale 4 aus gesehen, sehr klein für hohe Frequenzen, da bei geschlossenen Schaltstufen 8 das Impedanzglied 7 diese stark abschwächt.

In diesem Normalzustand des Systems, der sich mit Hilfe der Reset- Schaltung 15 nach Anlegen der Versorgungsspannung selbsttätig einstellt, sendet die Steuer- und Messzentrale 4 das Standardsignal etwa in Form eines hochfrequenten Signalpakets von stetig steigender Amplitude über den kombinierten Adressen- und Versorgungsleiter 2. Die Steuer- und Messzentrale steigert die Amplitude des ausgesendeten Signales so lange, bis der Adressierdetektor 12 einer Zelle Z1 anspricht, und die, der temperaturgesteuerten Stromquelle 9 in Serie geschaltene Schaltstufe 13 schliesst. Jede dieser Zellen Z1 .. Zn umfasst eine Schaltstufe 13 und die zugehörigen Steuerelemente 6 bis 12. Davon kann ein Adressierdetektor 12 vorzugsweise durch einen Amplitudendetektor und einen vorgeschalteten selektiven Frequenzfilter gebildet sein. Dadurch wird sichergestellt, dass nur die Frequenz des Standardsignales detektiert wird, wobei die Detektion selbst etwa durch Gleichrichten des Signales mittels einer Diode und durch einen nachgeschalteten Schwellwertschalter erfolgen kann.

Es ist natürlich möglich, und in bestimmten Fällen vorzuziehen, anstelle der Amplitude die Frequenz oder einen anderen Parameter des Standardsignales, wie etwa eine Impulsbreite zur Erkennung der Adressierung heranzuziehen. In diesem Falle müssen die Steuer- und Messzentrale und der Adressierdetektor entsprechend ausgebildet sein.

Die Abschwächung des Parameters der Standardsignales wird, wie man aus Fig. 2 und 3 ersehen kann, mitbestimmt von den elektrischen Eigenschaften der Schaltstufe 8. Diese kann etwa als Transistor, Feldeffekttransistor oder Relais ausgebildet sein. Da sich dementsprechend unterschiedliche Impedanzverhältnisse in Bezug auf die Abschwächung des Parameters des Standardsignales ergeben, kann es sich als vorteilhaft herausstellen, das Eingangssignal des Adressierdetektors direkt vom Adressenleiter 20 bzw. vom kombinierten Adressen- und Versorgungsleiter 2 abzugreifen. Dies wird anhand des Ausfühungs-beispiels in Fig. 3 dargestellt, wo der Eingang des Adressierdetektors 12 direkt mit dem Adressenleiter 20 verbunden ist, im Gegensatz zu den anderen Ausführungsbeispielen, wo dieser Abgriff am Ausgang der Schaltstufe 8 (bzw. am Eingang des Impedanzgliedes 7) vorgesehen ist.

Weiter kann es sich insbesondere bei kurzen Abständen zwischen den Schaltstellen als vorteilahft erweisen, die Ader des Kabels, die den Adressenleiter darstellt, aufzutrennen, und vorzugsweise eine Spule 110 in die Schalstelle zu integrieren. Dies ermöglicht kürzere Abstände zwischen den einzelnen Schaltstellen 14 bei gleichbleibender Kabel-Impedanz pro Meter.

Sobald die Detektion angesprochen hat, wird die Schaltstufe 13 geschlossen, und das Messignal fliesst über den Informationsleiter 1. Vorzugsweise wird die Schaltstufe 8 erst nach einer gewissen Verzögerungszeit geöffnet, die durch das Verzögerungsglied 26 (Fig. 2) festgelegt ist. Die Verzögerungsschaltung 26 dient dazu, sicherzustellen, dass die Steuer- und Messzentrale ausreichend Zeit hat, um das Senden des Standardsignales einzustellen, da sonst das unmittelbar nach Ansprechen des Detektors erfolgende öffnen der Schaltstufe 8 bei fortgesetztem Senden des Standardsignales ein Ansprechen der nächsten, eine Zelle weiter von der Steuer- und Messzentrale entfernt gelegenen Schaltstelle 14 zur Folge hätte.

Bedingt durch das Schliessen der Schaltstufe 13 fliesst ein Strom über den Informationssignalleiter 1, dessen Stromstärke der Temperatur proportional ist, und der von der Steuer- und Messzentrale 4 über den Messwiderstand 5 gemessen werden kann.

Im Ausführungsbeispiel der Fig. 1 geht man davon aus, dass selbst bei sehr niedrigen Temperaturen ein Minimalstrom fliessen muss. Dieser bewirkt wiederum ein minimales Signal, das am Messwiderstand 5 abgreifbar ist. Wird nun dieses Minimalsignal festgestellt, so stellt die Steuer- und Messzentrale 4 das Senden des Standardsignales ein.

Die erfindungsgemässe Anordnung stellt nun sicher, dass genau die erste, dass heisst die, der Steuer- und Messzentrale 4 am nächsten gelegene Schaltstelle 14 anspricht. Dies wird dadurch sichergestellt, dass die Schaltstufen 8 aller Schaltstellen 14 geschlossen sind. Die Abschwächung des Parameters des Standardsignales von einer Zelle zur nächsten ist daher maximal und stark progressiv; Je weiter eine Zelle von der Steuer- und Messzentrale 4 entfernt ist, um so grösser ist die Abschwächung des Parameters des Standardsignales zur Adressierung auf Grund der dazwischenliegenden Kabellänge, beziehungsweise auf Grund des in die Schaltstelle 14 integrierten Impedanzgliedes 110 (Fig. 3).

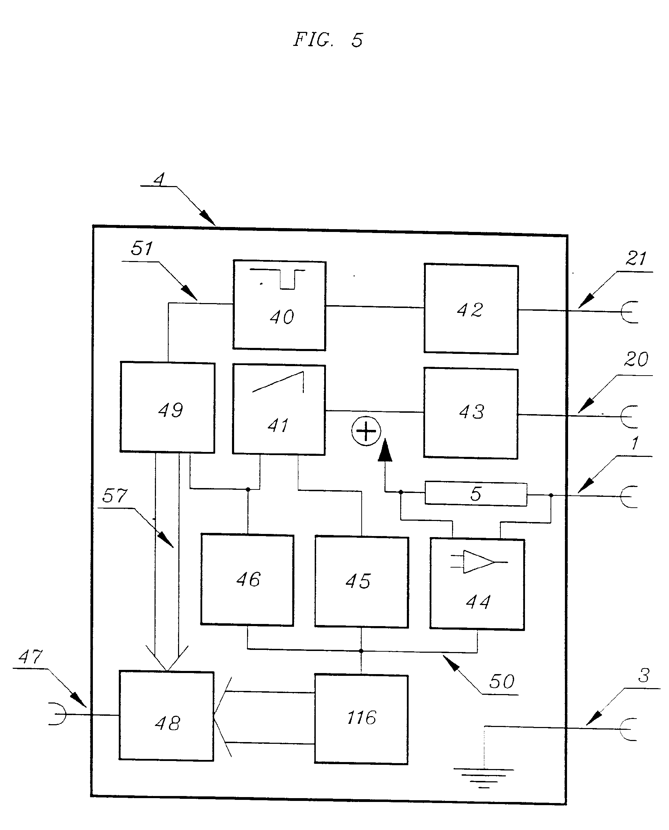

Im zweiten Teil des Abfragezyklus', der nun derart in Gang gesetzt ist, werden nacheinander alle Schaltstellen 14 des Kabels angesteuert, wobei die Steuer- und Messzentrale 4 jeweils das Standardsignal aussendet, das mit stetig steigender Amplitude für die mit der Kabellänge steigende Impedanz kompensiert. Ein Zähler 49 in der Steuer- und Messzentrale (Fig.5), der nach Vollendung jeder Messung weitergeschaltet wird, sorgt dafür, dass die Zuordnung der gemessenen Werte zu dem weiterzuverarbeitenden Temperaturprofil erhalten bleibt.

Jede Zelle, die einmal adressiert war, schaltet sich nach vollbrachter Übermittlung der zugehörigen Information weg, indem sie die Schaltstufen 8 und 13 in den offenen Zustand bringt und derart das Impedanzglied 7 vom Rest des Kabels trennt.

Eine derart weggeschaltene Zelle ist elektrisch vom Kabel getrennt; da sie nicht mehr aktiv ist, kann sie nur mehr durch einen Reset- Zyklus, wie oben beschrieben, wieder in die Normalstellung gebracht werden.

Am in Fig. 3 ausgeführten Beispiel einer Schaltstelle 14 sieht man eine Anordnung der Erfindung mit einem vierädrigen Kabel. Neben dem Informationssignalleiter 1 und dem Masseleiter 3, die die gleiche Funktion haben wie in den vorhergehenden Figuren, ist ein Versorgungsleiter 21 vorgesehen, der die Spannungsversorgung aller elektronischen Elemente der Schaltstelle 14 zur Aufgabe hat. Der Adressenleiter 20 ist hier vom Versorgungsleiter 21 getrennt.

Um anzuzeigen, dass es sich hier um ein Kabel von vernachlässigbarer Impedanz handelt, wurde in Fig. 3 auf die Darstellung der Ersatzschaltbilder 10 und 11 der entsprechenden Adern des Kabels verzichtet. Es wurde hingegen, wie schon erwähnt, der Adressenleiter des Kabels aufgetrennt, und ein Impedanzglied 110 als Bestandteil der Schaltstelle 14 eingefügt.

In Fig. 3 ist eine Ausführungsform der Erfindung dargestellt, die zur Ausgabe von Information ausgeführt ist. In diesem Falle wird die gewünschte Information von der Steuer- und Messzentrale 4 in die Form eines Stromsignales umgesetzt, das anschliessend am Ort der angewählten Schaltstelle durch einen Messwiderstand 105 in ein Nutzsignal gewandelt wird. Dieses wird durch eine Informationsausgabeeinheit 106 ausgegeben. Beispielsweise kann man durch eine derartige Anordnung eine grossflächige Anzeige steuern oder etwa die Verteilung der Heizleistung längs einer Widerstandsheizleitung durch geeignete Schalter steuern.

Die Übermittlung der Information in Form eines Stromsignales wurde im vorliegenden Beispiel deswegen gewählt, da bei einer derartigen Anordnung die Impedanz des Kabels keine Rolle spielt, und daher auch die am Ort der Schaltstelle ankommende Information nicht von der Kabellänge abhängig ist. Dieser Vorteil ergibt sich selbstverständlich unabhängig von der gewählten Art der Adressierung. Es kann jedoch ohne weiteres die Information in Form einer Spannung oder, wie dies aus der Telekommunikation bekannt ist, in Form eines, auf eine Trägerfrequenz aufmodulierten Signales erfolgen. Die Ausführung des am Ort der Schaltstelle vorgesehenen Wandlers muss dann je nach gewählter Signalübertragungsform angepasst werden.

Nach der Umwandlung des ankommenden Informationssignales in eine Spannung durch den Messwiderstand 105 wird die Information durch einen Analog-Digitalwandler 16 in ein digitales Signal umgesetzt, und in einem Latch 17 mit seinen Ausgängen 23 gespeichert.

Im Falle dass binäre Information übertragen wird, wird man den Analog-Digitalwandler zweckmässig als Schmidt- Trigger ausbilden, und die übertragene Information ist dementsprechend ein Bit pro Zelle bzw. Schaltstelle. Es kann selbstverständlich auch serielle Information in Form einer Serie von Bits, die etwa in einem gewissen zeitlichen Abstand hintereinander übertragen werden erfindungsgemäss in beiden Richtungen übertragen werden. Ebenso ist es möglich, eine gewisse Anzahl von Bits parallel durch eine der oben schon erwähnten Modulationstechniken zu codieren, und zu übertragen, selbst wenn in den folgenden erläuternden Beispielen von einem Analog-Digitalwandler die Rede ist.

In Fig. 3 wird die ankommende Information durch einen Analog-Digitalwandler mit Differenzeingang 16 in ein Nutzsignal umgewandelt. Der Differenzverstärkereingang stellt sicher, dass nur die am Messwiderstand 105 abfallende Spannung zur Erzeugung des Nutzsignales beiträgt, und die Impedanz des zwischen der Steuer- und Messzentrale und dem Messwiderstand liegenden Kabels dieses nicht verfälscht.

Der Zeitpunkt, zu dem die, vom Analog-Digitalwandler 16 kommenden Daten in das Latch 17 übertragen und gespeichert werden, wird zweckmässig durch ein Verzögerungsglied 22 festgelegt, das eine gewisse Zeit nach der Erkennung des Standardsignales durch den Adressierdetektor 12 einen Impuls abgibt. Diese Verzögerung dient dazu, sicherzustellen, dass die Stromstärke im Informationsleiter 1 nicht mehr ändert, und alle parasitären, im Kabel unweigerlich vorhandenen Kapazitäten umgeladen sind, und die Analog-Digitalwandlung durchgeführt ist.

Nach Ablauf der Verzögerungszeit gibt das Verzögerungsglied 22 einen Impuls an einen Signalformer 18 ab, der einen entsprechenden Strobe- Impuls an das Latch 17 abgibt, und so die Datenübertragung vom Analog-Digitalwandler einleitet.

Es kann in verschiedenen Anwendungsfällen von Vorteil sein, dieses Strobesignal am Ausgang des Kabels, am Ort der entsprechenden Informationsausgabeeinheit 106 zur Verfügung stehen zu haben. Beispielsweise kann es in gewissen Anwendungsfällen vorteilhaft sein, das Funktionieren des Kabels durch eine geeignete Schaltung zu überwachen (sog. 'Watchdog'). Dies könnte etwa so vor sich gehen, dass überprüft wird, ob in festen Zeiträumen jeweils ein Strobesignal 24 vorliegt, und somit sicher feststeht, dass der entsprechende Adressierdetektor 12 angesprochen hat. Wird zum Beispiel ein zu häufiges oder zu seltenes Auftreten des Strobesignales festgestellt, so kann auf ein Versagen der Anordnung geschlossen werden. Eine ähnliche Überlegung zeigt, dass das regelmässige Auftreten des von der Reset-Schaltung 15 erzeugten Signales 25 zur Erkennung des sicheren Funktionierens der erfindungsmässigen Anordnung herangezogen werden kann.

Wenn anschliessend, nach erfolgtem Ansprechen des Adressierdetektors 12, die beiden Schaltstufen 8 und 13 geöffnet werden, und sich die gesamte Schaltstelle 14 derart in einen Zustand hoher Impedanz schaltet, ist sichergestellt, dass die übergebenen Daten im Latch gespeichert sind, und dort unverändert am Ausgang 23 stehen bleiben, bis sie eventuell bei einem weiteren Zyklus von der Steuer- und Messzentrale 4 verändert werden.

Nach Beendigung eines kompletten Abfragezyklus' befinden sich alle Schaltstufen 8 im offenen Zustand. Um einen neuen Zyklus, beginnend bei der ersten, der Steuer- und Messzentrale 4 am nächsten gelegenen Schaltstelle 14 zu beginnen, setzt die Steuer- und Messzentrale 4 die Versorgungsleitung 21 auf Null Volt zurück. Die, zweckmässig in jeder Schaltstelle 14 vorhandene Reset-Schaltung 15 stellt sicher, dass beim erneuten Anlegen der Versorgungsspannung an die entsprechende Leitung 21 die Schaltstufen 8 aller Schaltstellen 14 geschlossen, und die Schaltstufen 13 aller Schaltstellen 14 offen sind. Sobald sich die neu angelegte Versorgungsspannung stabilisiert hat, wird das Halten der entsprechenden Schaltstufen in diesen Zuständen vom Adressierdetektor 12 übernommen.

Es ist selbstverständlich eine Ausführungsform der erfindungegemässen Anordnung möglich, in der das Reset- Signal durch einen kombinierten Reset- und Adressenleiter den Schaltstellen zugeführt wird, wobei ein Versogungsleiter die Spannungsversorung aller Schaltstellen übernimmt. In diesem Falle würde sich das Reset-Signal vom Standarsdsignal zur Adressierung der Schaltstellen etwa durch seine lange Dauer unterscheiden.

Wie schon erwähnt, kann es je nach Anwendung von Interesse sein, diese Zyklen am Ausgang 23 der Schaltstelle 14 zur Verfügung zu haben. Aus diesem Grund ist in Fig. 3 ein Ausgang der Reset- Schaltung 15 zum Latch 17 geführt, wo er eines der herausgeführten Bits 25 sein kann. Die, durch das entsprechende Signal abgegebene Information wird natürlich nicht im Latch gespeichert. Die Zeichnung soll nur zeigen, dass das Reset-Signal und das, von der Verzögerungsstufe 22 auf der Leitung 24 abgegebene Signal, das die Adressierung der Schaltstelle 14 anzeigt, aus der Informationsausgabeeinheit 106 herausgeführt werden, wo sie, wie schon erwähnt, zum Beispiel einer 'Watchdog'-Schaltung zugeführt werden können.

Um die Aufrechterhaltung der ausgegebenen, und im Latch 17 gespeicherten Information auch während des Reset- Zyklus' zu gewährleisten, ist im Ausführungsbeispiel der Fig. 3 eine eigene, lokale Spannungsversorgung 19 vorgesehen Diese könnte natürlich auch in Form eines Kondensators ausgeführt werden, der die kurze Zeit des Reset- Impulses auf der Versorgungsleitung 21 überbrückt. Eine weitere Alternative ist dadurch gegeben, dass man neben der Versorgungsleitung, die in diesem Falle andauernd aktiv ist, eine weitere, eigens dafür vorgesehene Reset - Leitung vorsieht. Die Ausgabe- Schaltstufen 16 bis 18 würden in diesem Falle von der Versorgungsleitung versorgt werden, und eine Spannungsversorgungsstufe 19 könnte entfallen.

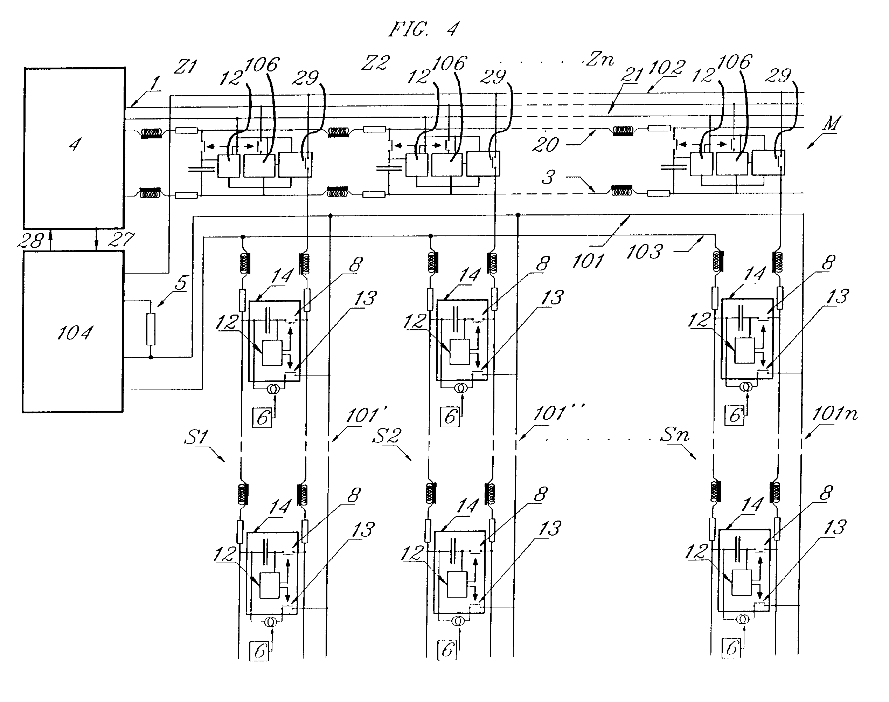

Bei der Ausführungsform nach Fig. 4 ist eine Kaskadenschaltung in der Form vorgesehen, dass eine Master- Anordnung M mit der Steuerzentrale 4, Informationsleiter 1, Adressenleiter 20 und einem zusätzlichen Versorgungsleiter 21 (wie in der Ausführung nach Fig. 3), eine Anzahl von Slave-Anordnungen S1, S2, .. Sn steuert, wobei den letzteren ein Haupt-Informationsleiter 101, ein Haupt-Adressenleiter 102 und ein Haupt-Masseleiter 103 zugeordnet ist, sowie gegebenenfalls eine von der Zentrale 4 gesteuerte Slave-Zentrale 104, deren Funktion jedoch auch nötigenfalls von der Zentrale 4 wahrgenommen werden könnte. Beim Adressenleiter 102 handelt es sich wiederum um einen kombinierten Adressen- und Versorgungsleiter.

Zur Steuerung der Slave-Anordnungen S1 bis Sn werden zunächst die Zellen Z1 bis Zn jeweils angewählt. Dies geschieht in schon beschriebener Weise mittels des Standardsignales. Jeder Zelle Z1 bis Zn ist eine Informationsausgabeeinheit 106 samt einem, von der ausgegebenen Information determinierten Schalter 29 zugeordnet. Der Schalter 29 schaltet die kombinierte Versorgungs- und Adressenleitung 102 der Slave-Anordnungen S1 bis Sn.

Durch ein geeignetes Schaltwerk stellt die Steuer- und Messzentrale 4 nun sicher, dass jeweils eine und nur eine Slave-Anordnung mit der Slave-Zentrale 104 verbunden wird. Dies bedeutet, dass nach der ersten vollständigen Durchadressierung der Master-Anordnung M durch die Steuerzentrale 4 alle Schalter 29 geschlossen sind, bis auf den ersten Schalter 29, der der Zelle Z1 zugeordnet ist. Nach erfolgter derartiger Konfiguration der Schalter 29 bewirkt nun das, über die Leitung 27 übermittelte Signal, dass nacheinander alle Zellen der Slave-Anordnung S1 adressiert werden, bis die Zentrale 4 über die Rückmeldeleitung 28 erfährt, dass alle Zellen dieser Anordnung bereits abgefragt wurden, d.h. dass alle Schaltstufen 8 und 13 dieser Anordnung S1 offen sind. Sodann kann die Steuerzentrale 4 die Zellen Z1 bis Zn neu adressieren, wobei vorzugsweise die Schaltstufe der nächsten Zelle Z2 geöffnet, und alle anderen geschlossen werden, um die nächste Slave-Anordnung S2 zu adressieren.

Für alle Schaltstellen können im wesentlichen solche desselben Typs verwendet werden, wie dies an Hand der Fig. 2 beschrieben wurde. Gewünschtenfalls können dabei aber an Stelle der Messeinheiten 6 auch Informationsausgabeeinheiten 106 Verwendung finden bzw. ist ein Mischen von Informationsausgabe- und Informationseinleseeinheiten möglich.

Im Beispiel nach Fig. 4 ist der Haupt-Informationsleiter 101 allen Slave-Anordnungen S1 .. Sn gemeinsam, und deren Informationsleiter 101′ .. 101n sind mit ihm permanent verbunden. Es kann sich jedoch inbesondere dann als vorteilhaft herausstellen, auch diesen Leiter durch den Schaltstufen 29 parallel angeordnete und im Gleichtakt arbeitende Schaltstufen mit den Zweigen 101′, 101˝ bis 101n zu verbinden, wenn sehr viele einzelne Schaltstellen 14 von der Slave-Zentrale 104 angesteuert werden sollen.

Wenn die Schalstufen 13 der entsprechenden Schaltstellen in Form eines Transistor-Schalters ausgeführt werden, der einen zwar sehr hohen, doch endlichen Sperrwiderstand hat, so kann sich im Falle der Parallelschaltung sehr vieler solcher geschlossener Schalter 13 deren einer (und nur einer) zur Informationsübertragung geöffnet ist, zusammen ein unzulässig hoher Widerstand gegen den Masseleiter 3 ergeben. Dies würde die Übermittlung der Information der adressierten Schaltstelle verfälschen, insbesondere dann, wenn diese in Form eines eingeprägten Stroms übertragen wird. Durch die oben beschriebene sinngemässe Abwandlung der in Fig. 4 dargestellten Anordnung, in der auch der Informationsleiter 101 der Schaltstellen der Stränge S1,S2,..Sn wie oben beschrieben geschalten wird, kann diese Situation vermieden werden.

Die Kaskadierung der Anordnung lässt sich natürlich beliebig weit fortsetzen. Man könnte so, ausgehend von der, in Fig. 4 dargestellten Anordnung zu einer sozusagen drei- oder höherdimensionalen Anordnung gelangen, indem man anstatt des Temperatursensors 6 der zweiten, von der Steuer- und Messzentrale 104 angewählten Slave-Anordnung S1, einen der Schaltstufe 29 samt zugehöriger Informatiosnausgabeeinheit 106 entsprechenden Schalter verwendet, der von der Steuer- und Messzentrale 4 adressiert wird. Die Slave-Anordnung S1 könnte dann eine Subslave- Steuer- und Messzentrale betreiben, deren Adressen- und / oder Informationsleiter zuerst durch jeweils eine Schaltstufe 29 der Master-Anordnung M mit der Steuer- und Messzentrale 4 adressiert wird, und danach durch eine weitere, den Schaltstufen 29 entsprechende Schaltstufe in der Slave-Anordnung S1 geschalten wird, die ihrerseits von der Steuer- und Messzentrale 104 geschalten wird. Eine weitere, in der Fig. nicht abgebildete Subslave- Steuer- und Messzentrale liest in diesem Falle die Temperaturwerte der so adressierten Sensoren ein.

Eine ähnliche Anordnung ist möglich, und kann je nach Anwendungsfall von Vorteil sein, wenn man erfindungsgemässe Anordnungen derart kaskadiert, dass anstelle einer Steuer- und Messzentrale 104 eine Vielzahl von Steuer- und Messzentralen 4 parallel vorgesehen sind, die es ermöglichen, unterschiedliche, ihnen jeweils zugeordnete Slave-Anordnungen gleichzeitig anzuwählen. Dies bietet gegenüber der, in Fig. 4 dargestellten Kaskade den Vorteil, dass dadurch die Adressierung der Slave-Anordnungen schneller vonstatten gehen kann.

Der Abfragezyklus wird im Falle der Kaskadierung von erfindungsgemässen Anordnungen wie folgt durchgeführt:

Die Master- Steuer- und Messzentrale 4 adressiert alle Zellen Z1 bis Zn der Master-Anordnung M durch, wobei die über den Informationsleiter 1 ausgegebene Information die Informationsausgabeinheit 106 der ersten Zelle Z1 den ihr zugeordneten Schalter 29 in die geschlossene Stellung bringt, wogegen die Informationsausgabeeinheiten aller anderen Zellen Z2 bis Zn die ihnen zugeordneten Schalter 29 in den offenen Zustand bringen.

Anschliessend bewirkt die Master- Steuer- und Messzentrale 4 durch Abgabe des Signales 27, dass die Slave- Steuer- und Messzentrale 104, deren Adressenleiter 102 nun, determiniert durch die entsprechende Schalterstellung 29 der Master-Anordnung M, mit der Slave-Anordnung S1 verbunden ist, der Reihe nach alle Schaltstellen adressiert.

Nachdem die Slave- Steuer- und Messzentrale 104 alle Schaltstellen adressiert hat, bewirkt sie durch Abgabe des Signales 28, dass die Steuer- und Messzentrale 4 sämtliche, der Master-Anordnung M zugehörigen Informationsausgabeeinheiten 106 neu lädt, wobei der Schalter 29 der ersten Zelle Z1 geöffnet, der der zweiten Zelle Z2 zugeordnete Schalter 29 geschlossen, und die Schalter 29 aller weiteren Zellen bis Zn geöffnet werden.

Dadurch wird nun der Adressenleiter 102 der Slave- Steuer- und Messzentrale 104 mit der Slave- Anordnung S2 verbunden, und die Slave- Steuer- und Messzentrale 104 kann die zweite Slave-Anordnung S2 adressieren.

Diese Prozedur wird solange fortgesetzt, bis die letzte Slave-Anordnung Sn von der Slave- Steuer- und Messzentrale 104 durchadressiert wurde. Die Master- Steuer- und Messzentrale 4 wird anschliessend den Schalter 29 der letzten Zelle Zn öffnen, und wieder von vorne beginnen, indem sie den ersten, der Zelle Z1 zugeordneten, schliesst.

An Hand Fig. 5 wird eine bevorzugte Ausführungsform einer Steuer- und Messzentrale 4 beschrieben. Es handelt sich um eine Ausführung, die zum Anschluss an eine vier- ädrige Ausführungsform der erfindungemässen Anordnung geeignet ist. Es werden dementsprechend der Masseleiter 3, der Informationssignalleiter 1, der Versorgungsleiter 21 sowie der Adressenleiter 20 aus der Steuer- und Messzentrale herausgeführt.

Wenn man eine dreiädrige erfindungsgemässe Anordnung betreiben will, so genügt es, ausgehend vom in Fig. 5 vorliegenden Schema, den Versorgungsleiter 21 und den Adressenleiter 20 zu kombinieren, indem der Ausgang 20 des Adressenleiters durch einen Kondensator mit dem Versorgungsleiter 21 verbunden wird. Dieser übernimmt anschliessend die Rolle des kombinierten Versorgungs- und Adressenleiters 2.

Will man eine fünfädrige Ausführung mit der Steuer- und Messzentrale 4 betreiben, so wird neben den in Fig. 5 dargestellten Ausgängen noch der Reset - Leiter herausgeführt, indem der Ausgang einer monostabilen Kippstufe 40 an die entsprechende Ader des Kabels angeschlossen wird.

Selbstverständlich ist es auch möglich, eine vierädrige Variante der erfindungsgemässen Anordnung zu betreiben, die aus einem kombinierten Versorgungs- und Adressenleiter 2 besteht, einem Masseleiter 3, einem Informationsleiter 1 sowie aus einem Reset- Leiter. Eine derartige Anordnung kann dort vorteilhaft eingesetzt werden, wo man die Kosten für den auf allen Schaltstellen vorkommenden Reset- Schaltkreis sparen will, und durch einen einfachen Reset- Eingang ersetzt.

Die in Fig. 5 dargestellte Steuer- und Messzentrale 4 ist zum Einlesen von Informationen ausgeführt, wie sie beispielsweise von Messfühlern (Fig.1) stammen; die Messwerte werden in einem Speicherelement ram 48 abgelegt, und können anschliessend von einem Computer, der in der Fig. nicht dargestellt ist, verarbeitet werden. Hiezu ist das Speicherelement ram 48 mit einem Ausgangsanschluss 47 versehen.

Die im Beispiel der Fig. 5 beschriebene Informationsübertragungstechnik geschieht mittels eines dem Informationssignalleiter 1 eingeprägten Stroms, der vom Messwiderstand 5 und einem Differenzverstärker 44 in ein Nutzsignal 50 umgewandelt wird. Dieses Nutzsignal 50 wird einem Analog-Digitalwandler A/D 116 zugeführt, der die gewandelten Werte anschliessend im Speicher ram 48 ablegt. Im Beispiel der Fig. 5 wird das Nutzsignal 50 durch Differenzbildung gegen eine feste, in der Steuer- und Messzentrale 4 vorhandenen Spannung gebildet. Dies wird in der Zeichung durch ein '+' Zeichen symbolisiert.

Ein Zähler 49, dessen Ausgänge 57 mit den Adressenleitungen des Speichers ram 48 verbunden sind, sorgt dafür, dass die Zuordnung der Adressen längs des Kabels 1,3,20,21 zu den Adressen im Speicher ram 48 erhalten bleibt. So können vorzugsweise die Werte der Schaltstelle der ersten Zelle Z1 (Fig.1) in einer ersten Speicheradresse, die der zweiten Zelle Z2 in der zweiten Speicheradresse, und so fort, abgelegt werden. Die Speichergrösse ist vorteilhaft mindestens so gross wie die Anzahl der zu verarbeitenden Schaltstellen, kann aber auch kleiner sein als diese, wenn die weiterverarbeitung der Messdaten schon erfolgt, bevor die letzte Zelle Zn adressiert wurde.

Das Weiterzählen von einer Schaltstelle zur nächsten geschieht wie im folgenden beschrieben:

Sobald von einer Komparatorstufe 45 festgestellt wird, dass das Nutzsignal unter einen bestimmten minimalen Wert gefallen ist, startet diese einen Rampen- Generator 41, dessen Ausgangsspannung die Amplitude des Standardsignalgenerators 43 bestimmt. Dieser wird daher beginnen, mit stetig steigender Amplitude das Standardsignal zu senden.

Sobald die erste Schaltstelle der ersten Zelle Z1 (Fig.1) das Standardsignal detektiert hat, schliesst sie den Schalter 13, der ein, mittels eines Sensors 6 gemessenes, einer physikalischen Grösse proportionales Signal in Form eines Stroms sendet. Dieser Strom muss bei korrektem Funktionieren der Anordnung ein minimales Mass überschreiten. Ein Komparator 46 vergleicht daher das Nutzsignal 50 andauernd mit diesem Minimalwert; Wird er überschritten, so gibt er ein Signal an den Rampen- Generator 41 ab, das diesen veranlasst, seinen Ausgang zurückzusetzen. Als Folge davon wird auch der Standardsignal- Generator 43 das Senden des Standardsignales einstellen.

Das vom dieser Komparator - Stufe 46 abgegebene Signal kann vorteilhaft, wie in Fig. 5 gezeigt, dazu verwendet werden, um den Zähler 49 um eine Stelle weiterzuschalten.

Sobald das Nutzsignal bedingt durch die Entladung des Impedanzgliedes 7 (Fig.1) der adressierten Schaltstelle unter die minimale vom Komparator 45 detektierte Schwelle fällt, beginnt der gleiche Zyklus wieder von vorne. Die derart wiederholte Adressierung wird solange fortgesetzt, bis ein, vom Zähler 49 abgegebenes Überlaufsignal 51 anzeigt, dass die letzte Schaltstelle adressiert wurde.

Dieses Überlaufsignal 51 wird als Reset-Signal dazu verwendet, um die schon erwähnte monostabile Kippstufe 40 anzusteuern, die wiederum eine Versorgungsstufe 42 steuert. Dies bewirkt ein kurzzeitiges Abfallen der Versorgungsspannung, und hat zur Folge, dass alle, auf den einzelnen Schaltstellen 14 vorgesehenen Reset- Schaltstufen 15 beim Wiederanlegen der Versorgungsspannung die Schaltstufen in den definierten Ausgangszustand bringen, der dadurch gekennzeichnet ist, dass alle Schaltstufen 8 geschlossen, und alle Schaltstufen 13 offen sind.

Im Falle der Bestückung einer erfindungsgemässen Anordnung mit Informationsausgabeeinheiten 106, wie dies anhand eines Ausführungsbeispieles in Fig. 3 dargestellt ist, dreht sich die Richtung des Informationsflusses um.

Die Steuerung des Standardsignales in der Steuer- und Messzentrale 4 wird in diesem Falle derart vorgenommen, dass anstelle des Überschreitens eines festen Wertes des Nutzsignales 50 derjenige Spannungsabfall ermittelt wird, der dadurch entsteht, dass die Schaltstufe 13 der Schaltstelle schliesst, und der lokale Messwiderstand 105 (Fig.3) das am Informationsleiter 1 anliegende Signal gegen den Masseleiter 3 kurzschliesst. Der derart bestimmte Zeitpunkt dient dazu, das Senden des Standardsignales einzustellen.

Weiter wird der Zeitpunkt ermittelt, zu dem die Übertragung der Information beendet ist, indem der Spannungsanstieg, der durch öffnen der Schaltstufe 13 der adressierten Schaltstelle 14 entsteht, da der Messwiderstand nicht mehr gegen den Masseleiter geschalten ist, zu seiner Bestimmung herangezogen wird. Dieser Zeitpunkt dient zum Neustarten des Rampen-Generators 41.

Natürlich muss in diesem Falle der Analog-Digitalwandler 116 durch einen Digital-Analogwandler ersetzt werden, und es muss sinngemäss aus dem Speicher ram 48 gelesen werden, anstatt in ihn zu schreiben. Die Daten, die in den Speicher geschrieben werden, werden durch einen, in Fig. 5 nicht eingezeichneten, an der Leitung 47 angeschlossenen Computer errechnet.

Schliesslich muss, wenn die erfindungsgemässe Anordnung zur Informationsausgabe verwendet werden soll, sinngemäss anstelle des Messwiderstandes 5 in der Steuer - und Messzentrale eine durch den Digital-Analogwandler steuerbare Stromquelle gesetzt werden, deren Strom am Ort der Schaltstelle der jeweiligen Zelle Z1 .. Zn (Fig.1) durch die dort vorgesehenen Messwiderstände 105 (Fig.3) erfasst wird.

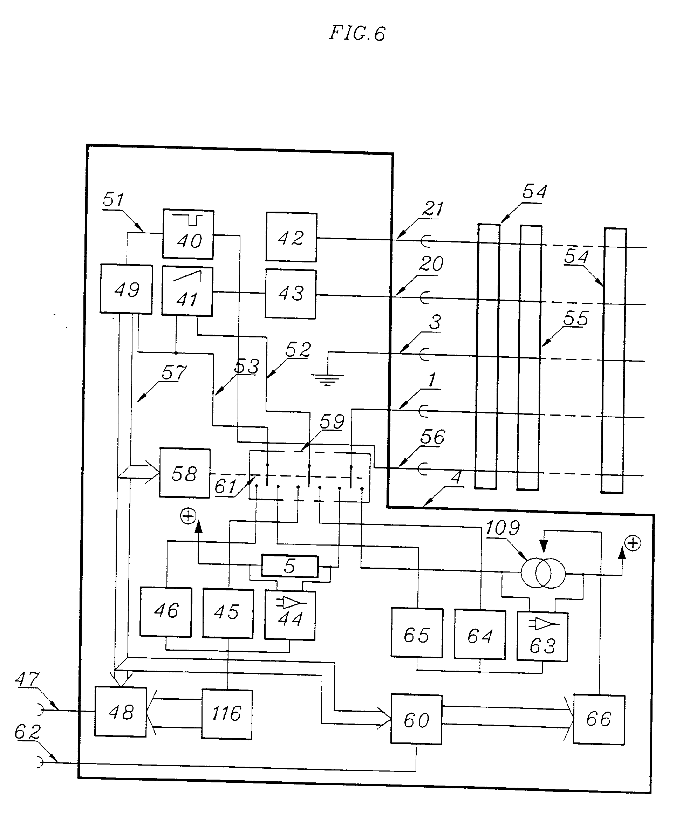

Die Anordnung, die im Ausführungsbeispiel der Fig. 6 dargestellt ist, zeigt die gemischte Bestückung eines Kabels mit Informationsein- IN 54 und Informationsausgabezellen OUT 55. Das dem Beispiel zugrundeliegende Kabel ist eine 5- ädrige Variante der erfindungsgemässen Anordnung. Neben dem Versorgungs- 21 und Masseleiter 3 sowie dem Adressenleiter 20 ist ein eigener Reset- Leiter 56 vorgesehen, der nach beendeter Abfrage und Ausgabe der Information alle Schaltstellen wieder in die Normalstellung bringt. Das dazu benötigte Reset- signal 51 wird wie im Beispiel der Fig. 5 durch den Überlauf des Zählers 49 erzeugt. Die Spannungsversorgungsstufe 42 stellt wieder die korrekte Versorgung des Versorgungsleiters 21 sicher.

Weiter findet man in Fig. 6 den Rampengenerator 41 mit einem Reset-Signaleingang 53 und einem Start-Signaleingang 52, dessen Ausgang für die Amplitude des nachgeschalteten Standardsignalgenerators 43 bestimmend ist. Dieser Generator 43 versorgt den Adressenleiter 20 des Kabels mit dem Standardsignal. Das Reset- Signal am Eingang 53, das immer dann aktiv wird, wenn eine Zelle Z1 .. Zn (Fig1) erfolgreich adressiert wurde, wird dem Zähler 49 zugeführt, und schaltet diesen jeweils eine Stelle weiter, solange bis die letzte Adresse erreicht ist, und das Überlaufsignal 51 das Ende des Adressierzyklus' anzeigt.

Am Ausgang des Zählers stehen Adressenleitungen 57 zur Verfügung, die jeweils einer Position einer Schaltstelle längs des Kabels 1,3,20,21,56 entsprechen. Diese Adressen werden an zwei Datenspeicher, nämlich den, anhand von Fig.5 beschriebenen Datenspeicher 48 und an einen weiteren Speicher ram 60 geleitet, bei letzterem zur Ausgabe von Daten, die vom Computer über die Anschlussklemme 62 eingegeben werden. Die vom Zähler 49 erzeugten Adressen dienen der Sicherstellung der Übereinstimmung der Zuordnung der Speicherinhalte mit den den eingelesenen bzw. ausgegebenen Werten entsprechenden Orten längs des Kabels.

Vorzugsweise wird man, wie auch an Hand von Fig. 5 beschrieben, der ersten Adresse den Ort der ersten Schaltstelle, und so fort, zuordnen.

Weiter werden die Adressenleitungen 57 des Zählers 49 gemäss Fig. 6 mit einem Speicher rom 58 verbunden. In diesem Speicher wird für jede Adresse eine binäre Zahl eingetragen, deren Wert davon abhängt, ob es sich bei der, von der entsprechenden Adresse adressierten Schaltstelle 14, um eine Informationseinlese- 6 oder Informationsausgabeeinheit 106 handelt.

Der Datenausgang 61 des Speichers rom 58, an dem diese binäre Zahl steht, wird einer dreistufigen Schaltstufe 59 zugeführt, Die darin vorhandenen drei unabhängigen Schalter werden im Gleichtakt zwischen zwei alternativen Stellungen in Abhängigkeit vom Signal 61 verstellt.

Der geschaltete Kontakt der drei Schaltstufen innerhalb der Stufe 59 betrifft einerseits den Informationsleiter 1, dem alternativ im Falle der Informationsausgabe das Signal einer programmierbaren Stromquelle 109 zugeführt wird, oder der im Falle der Informationseingabe von einem Sensor 6 (Fig.1) mit dem Messwiderstand 5 verbunden wird.

Andrerseits werden die beiden Steuersignale vom Start-Signaleingang 52 und vom Reset-Signaleingang 53 für den Rampengenerator 41 alternativ zwischen je zwei Komparatorstufen hin- und hergeschalten, die das Anliegen eines Minimalsignales im Falle der Informationseingabe, und das Vorliegen einer minimalen Impedanz des Kabels durch das erfolgte Schliessen eines der Schalter 13 einer Schaltstelle im Falle der Informationsausgabe messen. Im Falle der Informationseingabe startet der Komparator 45 den Rampengenerator 41 bei Unterschreiten eines am Ausgang des Messverstärkers 44 vorliegenden Minimalsignales und der Komparator 46 setzt die Rampe auf Null zurück, sobald ein Minimalsignal überschritten wurde. Im Falle der Informationsausgabe wird die, zur Erzeugung eines Minimalstromes nötige Spannung an der Stromquelle 109 durch einen Messverstärker 63, der vorteilhaft als Differenzverstärker ausgebildet werden kann, gemessen, und mit einem Minimalwert verglichen. Sind sehr grosse Spannungswerte nötig, um einen minimalen Strom fliessen zu lassen, oder ist die Stromquelle 109 in Sättigung, so ist die Schaltstufe 13 der nächstgelegenen Schaltstelle, die sich noch nicht in den Zustand hoher Impedanz geschalten hat, noch offen. Sobald sich, nach Erkennung des Standardsignales, die Schaltstufe öffnet, wird zumindest der Minimalstrom durch den lokalen Messwiderstand 105 (Fig. 3) fliessen, und die benötigte Spannung an der Stromquelle wird sich entsprechend verringern. Dies wird in der Komparatorstufe 65 festgestellt, die über die dreistufige Schaltstufe 59 das Signal zum Reset-Eingang 53 zum Anhalten des Rampengenerators 41 führt. In ähnlicher Weise wird der Rampengenerator 41 gestartet, wenn das vom Messverstärker 63 an der Stromquelle 109 gemessene Signal anzeigt, dass alle Schaltstufen 13 aller Schaltstellen geschlossen sind.

Stromquelle 109 und Messwiderstand werden von einer, der Steuer- und Messzentrale 4 eigenen Spannungsversorgung versorgt. Dies ist im Ausführungsbeispiel der Fig. 6 durch ein '+' Zeichen symbolisiert.

Zwischen Speicher 48 und Messverstärker 44 ist der schon erwähnte Analog-Digitalwandler 116 geschalten. Ebenso wird zwischen Speicher 60 und steuerbarer Stromquelle 109 ein Digital-Analogwandler 66 geschalten.

Fig. 7a zeigt ein Adressierkabel entsprechend der vorliegenden Erfindung, bestehend aus einem, einen Adressen-, einen Informations-, einen Versorgungs- und/oder einen Masseleiter enthaltenden Kabel 70, auf welches in gleichmässigen oder ungleichmässigen Abständen Schaltstellen mittels eines bekannten Klipmechanismus fixiert und durch ein Gehäuse 71 geschützt sind.

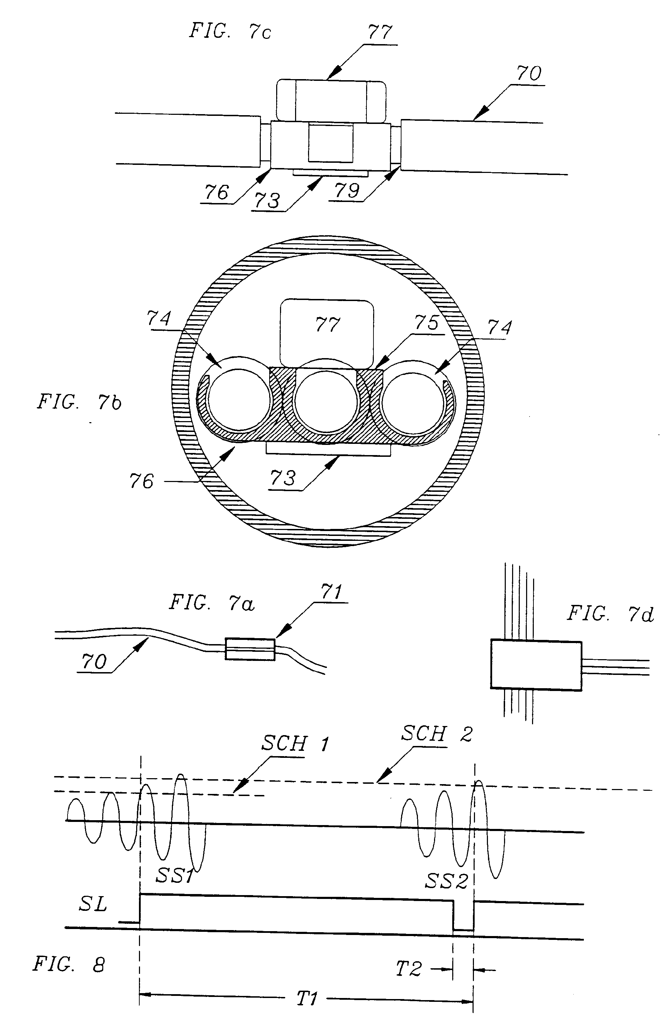

Die Fig. 7b zeigt eine derartige aufgeklipste Schaltstelle im Querschnitt, wobei der, die Schaltstelle bildende Clip 73 mit einem zur Durchdringung der Leiterisolierungen 74 geeignete Fortsätze 75 aufweisenden Träger 76 verbunden ist. Ein, das Impedanzglied 7 der Fig. 3 bildender Kondensator 77 ist ebenfalls mit dem Träger 76 verbunden. Die gesamte Schaltstelle wird von einem Schutzgehäuse 71 umgeben.

Die Fig. 7c ist eine vergrösserte Darstellung der Fig. 7a, worin im Bereich der aufzuklipsenden Schaltstelle die äussere Schutzhülle 79 des Kabels 70 entfernt wurde und der Träger 76 samt Chip 73 und Kondensator 77 auf der freigelegten, jedoch noch Isolierungen zwischen den Leitern aufweisenden Stelle des Kabels sichtbar sind.

Die Fig. 7d zeigt schematisch eine aufgeklipste Schaltstelle für ein Kabel entsprechend der Fig.4.

Die Fig. 8 zeigt ein Signaldiagramm für eine Folge von Standardsignalen wobei mit SS1 ein erstes und mit SS2 ein hierauf folgendes zweites Standardsignal bezeichnet ist.

Bei Aussenden des ersten Standardsignals SS1 wird die erste Schaltstelle als erstes die Signalschwelle SCH1 erkennen, da hinter der ersten Schaltstelle die Impedanz und damit das übertragene Signal erniedrigt sind. Die erste Schaltstelle wird nach Erkennen der Signalschwelle SCH1, welche dem Signalparameter entspricht, in den Aktivzustand geschaltet, in dem eine Informationssignalübertragung möglich ist. Die Aktivierung des Informationsleiters SL während einer bestimmten Dauer T₁ ist ebenfalls in Fig. 8 dargestellt.

Nach Beendigung der Informationsübertragungsphase T₁ wird ein neues Standardsignal SS2 ausgesandt, welches, nach Inaktivierung der vorhergehenden ersten Schaltstelle, als erstes in der geometrisch auf die erste folgenden zweiten Schaltstelle bei Überschreiten der Schwelle SCH2 als für sie bestimmtes Adressiersignal erkannt, und hierdurch der Informationsleiter SL während einer neuen Periode T₁ aktiviert wird. Die Zeitspanne T₂ zwischen Beendigung einer beliebigen Informationsübertragungsphase und dem Beginn der hierauf folgenden nächsten Informationsübertragungsphase kann relativ kurz gewählt werden, um eine möglichst optimale Adressierfrequenz zu erreichen.

Entsprechend einer Ausführungsart der Erfindung kann die Signalschwelle in jedem Adressierzyklus gespeichert werden und das Aussenden des folgenden Standardsignals kann mit dieser Schwelle begonnen werden, da durch die Kumulierung der Impedanzen der Kabelabschnitte zwischen dem Adressiergenerator und der jeweiligen adressierten Schaltstelle jede nachfolgende Schwelle höher ist als die vorhergehende, und somit ein Durchlaufen der Signalamplituden welche kleiner sind als die vorhergehende Schwelle, unterdrückt werden kann.

Allen erfindungemässen Anwendungen ist es gemeinsam, dass Informationsquellen- und Senken die sich am Ort der Schaltstellen lämgs des Kabels befinden, zu- oder von einer gemeinsamen Steuer- und Messzentrale geleitet werden.

Eine Anwendung der Erfindung besteht beispielsweise in der Überwachung von thermischen Anomalien, wie sie im allgemeinen einem Brand- Schadensereignis vorhergehen. Durch herkömmliche Brandmelder werden im allgemeinen physikalische Grössen erfasst, die mit einem schon eingetretenen Brand einhergehen. Durch die erfindungsmässige Erfassung und Auswertung vieler Temperaturwerte längs einer Linie kann jedoch ein derartiges Ereignis schon zu einem wesentlich früheren Zeitpunkt vorhergesagt werden. Diese Anordnung erfordert es jedoch, eine grosse Zahl von Temperatursensoren abzufragen, da sonst die Sicherheit der Aussage nicht ausreicht, um eine hinreichend niedrige Fehlalarmrate zu gewährleisten. Dies geschieht erfindungsgemäss, indem für die Erzeugung des Alarms ein Überschreiten einer minimalen Temperatur längs einer gewissen, minimalen Strecke gefordert wird.

Eine weitere, besonders vorteilhafte Anwendung der erfindungsgemässen Anordnung besteht in einem Kabel, das gemischt mit Temperatursensoren und Ausgabeeinheiten in Form von Löschventilen bestückt ist, und das es derart gestattet, lokalen Erwärmungen durch Betätigen naheliegender Löschventile zu begegnen. Eine derartige Anordnung kann entsprechend Fig. 6 ausgebildet sein.

Eine weitere Anwendung der Anordnung besteht in der Strahlenmesstechnik. So kann durch ein Kabel und eine Steuer- und Messzentrale des gegenständlichen Typs, dessen Information zur Steuer- und Messzentrale geleitet wird, und dessen Schaltstellen mit Dosimetern bestückt sind, eine Zone umgrenzt werden, und es kann die Dosisleistung längs des Kabels jederzeit bestimmt werden. Dadurch ist es möglich, sicherheitstechnisch sensible Zonen, etwa Kernkraftwerke, einfach zu überwachen.

## Patentansprüche

1. Adressieranordnung mit einem Kabel, welches zumindest einen an einen Adressiergenerator (43) angeschlossenen Adressenleiter (2), zumindest einen Informationsleiter (1) und zumindest einen mit dem Adressenleiter kombinierten oder von diesem getrennten Versorgungsleiter aufweist, welches Kabel einen Vielzahl von Schaltstellen (14) miteinander verbindet, welche an den Informationsleiter (1) angeschlossen sind, wobei Schaltstellen (14) Schaltstufen aufweisen, die über einen in jeder Schaltstelle vorhandenen Adressierdetektor (12) unabhängig voneinander betätigbar sind,
dadurch gekennzeichnet,
dass jede Schaltstelle (14) eine Normalstellung, einen aktivierten Zustand und einen inaktivierten Zustand aufweist,
dass der Adressiergenerator (43) zur Abgabe eines Standardsignals (SS1) ausgebildet ist, welches Standardsignal einen von allen Schaltstellen erkennbaren Signalparameter enthält,
dass die Adressierdetektoren (12) Mittel zur Erkennung des Signalparameters aufweisen durch welche jeweils in der den Signalparameter empfangenden Schaltstelle (14) dieser erkannte Signalparameter als für diese Schaltstelle bestimmtes Adressiersignal interpretierbar ist,
dass in jeder Schaltstelle Mittel (13) zur Aktivierung der Schaltstelle vorhanden sind, durch welche zur Aktivierung der Schaltstelle nach Erkennen des Signalparameters eine Datenquelle oder -senke (6) an den Informationsleiter (1) anschliessbar ist,
dass jede Schaltquelle Mittel (26) aufweist, durch welche nach Aktivierung dieser Schaltstelle diese für eine bestimmte Zeitdauer im aktivierten Zustand haltbar und hernach durch Trennen der Datenquelle oder -senke (6) vom Informationsleiter (1) inaktivierbar ist,
dass jede Schaltstelle veränderliche Impedanzmittel (7) aufweist, welche im Normalzustand und im aktivierten Zustand der Schaltquelle eine andere Impedanz aufweisen als im inaktivierten Zustand der Schaltquelle,
wobei durch die Erhöhung der Impedanz der Impedanzmittel (7) der zuletzt inaktivierten Schaltstelle (n-1) die Summe aus der Impedanz des Kabels zwischen dem Adressiergenerator (43) und einer auf die zuletzt inaktivierte Schaltstelle (n-1) folgende, als nächstes zu aktivierende Schaltstelle (n) und aus der Impedanz dieser als nächstes zu aktivierenden Schaltstelle (n) grössser ist als die Summe aus der Impedanz des Kabels zwischen dem Adressiergenerator (43) und der, auf die als nächstes zu aktivierende Schaltstelle (n) folgende Schaltstelle (n+1) und aus der Impedanz dieser folgenden Schaltstelle (n+1), und der Unterschied dieser Summen ausreichend gross ist, um den Signalparameter in der als nächstes zu aktivierenden Schaltstelle (n) in ausreichender Grösse und in der darauf nächstfolgenden Schaltstelle (n+1) ausreichend abgeschwächt zu empfangen, um ein Erkennen des Signalparameters in der als nächstes zu aktivierenden Schaltstelle (n) zu gewährleisten ohne ein Erkennen des Signalparameters in der darauf folgenden Schaltstelle (n+1) zu ermöglichen.

2. Adressieranordnung nach Anspruch 1, **dadurch** **gekennzeichnet**, dass die variablen Impedanzmittel ein Impedanzglied (7) aufweist, welches zwischen dem Adressenleiter und dem Massenleiter liegt, wobei vor und während der Aktivierung einer Schaltstelle diese Impedanzglieder mit dem Adressenleiter und dem Massenleiter verbunden sind und bei Inaktivierung einer Schaltstelle das Impedanzglied dieser inaktivierten Schaltstelle vom Adressenleiter und/oder vom Masseleiter trennbar ist, wodurch die Gesamtimpedanz des Kabelabschnitts zwischen dem Adressiergenerator und der auf die soeben inaktivierte Schaltstelle folgenden Schaltstelle erhöht wird.

3. Adressieranordnung nach Anspruch 2, dadurch gekennzeichnet, dass jede Schaltstelle eine erste Schaltstufe (8) zur Zu- und Wegschaltung des Impedanzgliedes (7) an den bzw. vom Adressenleiter (20), sowie eine zweite Schaltstufe (13) zur Zu- und Wegschaltung einer Signalquelle oder -Senke (6) an den bzw. vom Informationsleiter (1) aufweist.

4. Adressieranordnung nach Anspruch 3, dadurch gekennzeichnet, dass nach Erkennen des Signalparameters in einer bestimmten Schaltstelle die erste Schaltstufe (8) dieser Schaltstelle trennbar und ihre zweite Schaltstufe (13) schliessbar und nach Ablauf einer zur Informationsübertragung vorgesehenen Verzögerungszeit wieder trennbar ist.

5. Anordnung nach Anspruch 4, **dadurch** **gekennzeichnet**, dass die Verzögerungszeit durch ein Verzögerungsglied erzeugbar ist, dessen Bestandteil das Impedanzglied (7) ist.

6. Anordnung nach einem der Ansprüche 1 bis 5, **dadurch** **gekennzeichnet**, dass die erste Schaltstufe (8) einen Steuereingang aufweist, dem ein Verzögerungsglied (26) zwecks verspäteten öffnens derselben nach Erkennung des Parameters des Standardsignales vorgeschaltet ist.

7. Anordnung nach einem der Ansprüche 1 bis 6, **dadurch** **gekennzeichnet**, dass der Adressiergenerator (43) zur Abgabe des Standardsignales mit ansteigendem Wert einer, den Parameter enthaltenden elektrischen Grösse, die von den Adressierdetektoren (12) empfangen wird, ausgebildet ist, wobei durch den Adressierdetektor das Erkennen des Parameters in der empfangenen elektrischen Grösse als Empfang des für diese Schaltstelle gedachten Adressiersignals interpretiert wird.

8. Anordnung nach einem der Ansprüche 1 bis 7, **dadurch** **gekennzeichnet**, dass jeder Schaltstelle (14) eine Reset-Schaltung (15) zum Überführen derselben in eine Normalstellung, die nach Anlegen der Versorgungsspannung eingenommen wird, zugeordnet ist, in welcher Normalstellung die erste Schaltstufe (8) geschlossen und die zweite Schaltstufe (13) geöffnet ist.

9. Anordnung nach einem der Ansprüche 1 bis 8, **dadurch** **gekennzeichnet**, dass der Adressenleiter (20) des Kabels an jeder Schaltstelle (14) zur Aufnahme von in Serie geschalteten Impedanzgliedern (110) unterbrochen ist.

10. Anordnung nach einem der Ansprüche 1 bis 9, **dadurch** **gekennzeichnet**, dass der Adressierdetektor (12) einen Ausgang (24) besitzt, an dem ein Strobe-Signal abgreifbar ist, durch welches nach Erkennen des Parameters des Standardsignales durch den Adressierdetektor (12) der Pegel veränderbar ist.

11. Anordnung nach einem der Ansprüche 1 bis 10, **dadurch** **gekennzeichnet**, dass wenigstens ein Teil der Schaltstellen (14) zumindest einen Messwandler (6) für eine zu messende physikalische Grösse zur Umwandlung in ein, über den Informationsleiter (1) zu führendes Messignal aufweist, und dass vorzugsweise durch den Messwandler (6) mindestens eine Stromquelle (9) zur Abgabe eines dem Messwert entsprechenden Stromsignals steuerbar ist.

12. Anordnung nach einem der Ansprüche 1 bis 11, **dadurch** **gekennzeichnet**, dass wenigstens ein Teil der Schaltstellen (14) zumindest eine Informationsausgabeeinrichtung (106) aufweisen.

13. Anordnung nach einem der Ansprüche 1 bis 12, **dadurch** **gekennzeichnet**, dass mittels der, durch eine Schaltstelle (14) ausgegebenen Information, eine Verbindung (29) zu einer Adressenleitung (2) einer weiteren, von einer Steuer- und Messzentrale (104) versorgten Anordnung herstellbar oder unterbrechbar ist.

14. Schaltstelle zur Realisierung einer Adressieranordnung nach einem der Ansprüche 1 bis 13, **gekennzeichnet** **durch**
- eine erste Schaltstufe (8) zwischen einem Versorgungs- und/oder Adressiersignaleingang und einem Impedanzglied (7) welche erste Schaltstufe mittels eines Reset- Signals schliessbar ist,
- eine normalerweise offene zweite Schaltstufe (13) zwischen einem in der Schaltstelle befindlichen Informationsgeber oder Informationsempfänger und einem Signalein- oder -ausgang, sowie
- einem Adressierdetektor (12) durch welchen nach Erkennen eines Adressiersignals die geschlossene erste Schaltstufe (8) trennbar und die zweite Schaltstufe (13) für eine bestimmte Zeitdauer schliessbar ist.

15. Verfahren zur Adressierung einer Mehrzahl von mittels eines Kabels in Serie zu einem Adressiergenerator (43) verbundenen Schaltstellen einer Adressieranordnung nach einem der Ansprüche 1 bis 13, **dadurch** **gekennzeichnet**, dass
- mittels eines Reset - Signals alle Schaltstellen in einen an den Versorgungsleiter angeschlossenen, jedoch an einer Informationsübertragung gehinderten Zustand gebracht werden, dass
- eine Serie von Adressiersignalen von Adressiergeneratoren erzeugt und dem Kabel zugeführt werden, dass
- mittels eines ersten Adressiersignals die erste Schaltstelle während einer bestimmten Zeitdauer zur Informationsübertragung aktiviert wird, dass
- nach Abschluss dieser Informationsübertragung diese Schaltstelle derart inaktiviert wird, dass die Gesamtimpedanz des Kabelabschnitts zwischen dem Adressiergenerator und der auf die soeben inaktivierten Schaltstelle folgenden Schaltstelle derart erhöht wird, dass bei Aussenden eines neuen Standardsignals ein im Standardsignal enthaltener Parameter nur in dieser folgenden Schaltstelle erkannt wird, und dass
- hierauf die nächstfolgende Schaltstelle nach Erkennen des neuen Standardsignals in einen Zustand zur zeitlich begrenzten Informationsübertragung geschalten wird, nach dessen Ende sie ebenfalls inaktiviert wird, und dass der Parameter im hierauf folgenden Standardsignal mittels Erhöhung der Gesamtimpedanz an dieser Schaltstelle erkennbar ist, und
dass die Erhöhung der Gesamtimpedanz des Kabelabschnitts zwischen Adressiergenerator und der auf die soeben inaktivierte Schaltstelle durch Offnen der ersten Schaltstufe (8) erfolgt, welche der das Standardsignal leitende Adressenleiter mit dem Impedanzglied (7) verbindet, wodurch die der auf die soeben inaktivierte Schaltstelle folgenden Schaltstelle empfangene, den Parameter enthaltendene elektrische Grösse vergrössert wird.

16. Adressieranordnung nach einem der Ansprüche 1 bis 13, **dadurch** **gekennzeichnet,** dass die Zeitspanne während der jede einzelne Schaltstelle im aktivierten Zustand gehalten wird, durch die Übertragungsdauer des Standardsignales nach Erkennen des Parameters, oder durch Aufladen einer Kapazität durch das Standardsingnal und darauffolendes Entladen über einen entsprechend dimensionierten Widerstand einstellbar ist.

17. Adressiereinrichtung nach einem der Ansprüche 1 bis 13 oder 16, **dadurch** **gekennzeichnet**, dass die Teilimpedanzen des Adressenleiters und des Massenleiters zwischen einander folgenden Schaltstellen zusammen mit dem Impedanzglied (7) und der Abschlussimpedanz des Kabels derart gewählt sind, dass die Gesamtimpedanz des Kabelabschnitts hinter der jeweils aktivierten Schaltstelle unabhängig von der Anzahl folgender, noch nicht aktivierter Schaltstellen ist.

18. Verwendung einer Adressieranordnung nach einem der Ansprüche 1 bis 13 oder 16 bis 17 zur Datenerkennung in einem Überwachungsgerät, dadurch gekennzeichnet, dass mittels der in der Vielzahl von Schaltstellen enthaltenen Informationsquellen ein, das Überwachungsgebiet repräsentierendes Datenfeld erhalten wird, in dem die Daten zu überwachende Grössen darstellen, oder die zu überwachenden Grössen von ihnen abgeleitet werden.

19. Verwendung nach Anspruch 18 **dadurch** **gekennzeichnet,** dass das Überwachnungsgebiet eine Maschine, ein Fahrzeug, ein Gelände, ein menschlicher oder tierischer Organismus oder allgemein ein Messfeld ist, und dass die gemessenen Daten Temperatur, Druck, chemische Konzentration, elektrische Vorgänge oder allgemein eine, einer Überwachung unterworfene Messgrösse ist.

20. Verwendung nach Anspruch 18 oder 19, **dadurch** **gekennzeichnet**, dass es der Feuerüberwachung, der Überwachung von Maschinenfunktionen, tierischen oder menschlichen Organismen oder dergleichen dient.

## Claims

1. Addressing arrangement comprising a cable with at least an address wire (2) being connected to an address generator (43), at least a data wire (1) and at least a supply wire that may or may not be combined with the said data wire, mutually connecting multiple addressable units (14) that are connected to the data wire (1) the said addressable units (14) comprising switching means that are commutable independently from each other by an address detector (12) present in all addressable units, wherein
every addressable unit (14) has a normal state, an activated state, and an inactivated state,
the address generator (43) is built to send a standardized signal (SS1) which comprises a signal parameter that is recognizable by all addressable units;
the address detectors (12) at the addressable unit (14) receiving the signal parameter, comprise means to recognize the said signal parameter, this regognized signal parameter being interpretable as addressing signal provided for the said addressable unit,
means (13) are comprised in every addressable unit to activate the addressable unit, by which activation of the addressable unit following the recognition of the signal parameter, a source or sink of data (6) is connectable with the data wire (1),
means (26) are provided at every addressable unit to keep it in the activated state for a certain timespan after activation, and to inactivate it by separation of the source or sink of data (6) from the data wire (1),
every addressable unit comprise variable impedance members (7) that provide an impedance in the activated and in the normal state of the addressable unit that differ from the impedance in the inactivated state,
where by the increase of the impedance of the impedance members (7) of the last activated addressable unit (n-1) the sum of the impedance of the cable between the address generator (43) and an addressable unit (n) to be activated next, that follows the last activated addressble unit (n-1), and of the impedance of this addressable unit (n) to be activated next, is greater than the sum of the impedance of the cable between the address generator (43) and the addressable unit (n+1) following the addressable unit (n) to be activated next, and of the impedance of this next addressable unit (n+1), and the difference between said sums being sufficiently high, so as to receive the signal parameter in the addressable unit (n) to be activated next, in a sufficient quantity, and in the following addressable unit (n+1) in a sufficiently attenuated state, to provide for the recognition of the signal parameter in the addressable unit (n) to be activated, and to inhibit the recognition of the signal parameter in the following addressable unit (n+1).

2. Addressing arrangement as set forth in claim 1, wherein the variable impedance members comprise an impedance member (7) being located between the address wire and the ground wire, and where before and during activation of the addressable unit these imedance members are connected with the address wire and the ground wire, and where the impedance member is disconnectable from the address wire and/or form the ground wire when the addressable unit is inactivated, thus increasing the total impedance of the cable section between the address generator and the addressable unit, following the just activated addressable unit.

3. Arrangement as set forth in claim 2, wherein every addressable unit comprises a first switching means (8) to connect and separate the impedance member (7) to or from the address wire (20), and a second switching means (13) to connect and separate a signal source or signal sink (6) to or from the data wire (1).

4. Arrangement as set forth in claim 3, wherein following the recognition of the signal parameter in a particular addressable unit, the first switching means of this addressable unit is opened and the second switching means (13) is closed, and after expiration of a delay provided for information transmission, is opened again.

5. Arrangement as set forth in claim 4, wherein the delay is producable by a delay generator comprising the impedance member (7).

6. Arrangement as set forth in one of the claims 1 to 5, wherein the first switching means (8) comprise a control input and wherein a delay generator (26) is connected to provide delayed opening of the switch after recognition of the parameter of the standardized signal.

7. Arrangement as set forth in one of the claims 1 to 6, wherein the address generator (43) is built to send a standardized signal with increasing values of an electric property comprising the parameter to be received by the address detectors (12), and wherein the address detectors interpret the recognition of the parameter of the received electrical property as being the address signal that is provided for this addressable unit.

8. Arrangement as set forth in one of the claims 1 to 7, wherein every addressable unit (14) has a reset circuit (15) to bring it in a normal state, which is the state when the supply voltage is connected, where the first switching means (8) are closed, and the second switching means (13) are open.

9. Arrangement as set forth in one of the claims 1 to 8, wherein the address wire (20) of the cable is cut at each addressable unit (14), to insert an impedance member (110) in series connection.

10. Arrangement as set forth in one of the claims 1 to 9, wherein the address detector (12) has an output (24) where a strobe signal is available, that changes state when the address detector (12) recognizes the standardized signal.

11. Arrangement as set forth in one of the claims 1 to 10, wherein at least a part of the addressable units (14) have at least one sensor (6) that converts a measurable physical information into a measured signal that can be transmitted through the data wire (1), and wherein at least one current source (9) is controlled preferably by the sensor (6) to deliver a current signal, that is proportional to the measured value.

12. Arrangement as set forth in one of the claims 1 to 11, wherein at least a part of the addressable units (14) comprise at least one information output device (106).

13. Arrangement as set forth in one of the claims 1 to 12, wherein by means of the information output of an addressable unit (14) a connection (29) with the address wire (2) of a second arrangement that is controlled by a cable terminal processor (104), is opened or closed.

14. Addressable unit for the realization of an addressing arrangement as set forth in one of the claims 1 to 13, comprising:
- first switching means (8) between the supply- and/or address signal input and an impedance member (7) which first switching means is closed by a reset signal,
- normally open second switching means (13) between an information source or an information sink and a signal input or output, and
- address detector (12) which opens the closed first switching means (8) and closes the second switching means (13) for a certain timespan after recognition of an addressing signal.

15. Method to address multiple addressable units of an addressing device that are connected by a cable in series with an address generator (43) as set forth in one of claims 1 to 13, comprising the following steps:
- to set all addressable units to a state that connects them to the supply wire while they are hindered from information transmisssion using a reset signal,
- to produce a series of address signals by address generators that are sent to the cable,
- to activate the first addressable unit by a first address signal during a certain timespan for information transmission,
- to inactivate this addressable unit after termination of said information transmission such that the total impedance of the cable segment between the address generator and the addressable unit which follows the inactivated addressable unit, is sufficiently increased that, when a new standardized signal is sent, a parameter of this standardized signal is detectable only in this following addressable unit, and
- hereafter to bring the next following addressable unit after recognition of the standardized signal into a state for time - limited information transmission, at the end of which it is inactivated and the parameter in the following standardized signal is recognizeable through the incremented total impedance at this addressable unit, and where the increase of the total impedance of the cable segment bewteen the address generator and the addressable unit, that follows the just inactivated addressable unit is accomplished by opening of the first switching means (8) that connects the address wire conducting the standardized signal with the impedance member (7), thus increasing the electrical property containing the parameter received by the addressable unit that follows the just inactivated addressable unit.

16. Addressing arrangement as set forth in one of the claims 1 to 13, wherein the timespan while the addressable unit is hold in the activated state is determined by the duration of transmission of the standardized signal after recognition of the parameter, or by the standardized signal charging a capacitor which will discharge through an appropriately dimensioned resistor.

17. Addressing arrangement as set forth by one of the claims 1 to 13 or 16, wherein the impedances between the address wire and the ground wire between two succeeding addressable units are dimensioned such that the total impedance of the cable section after the activated addressable unit does not depend on the number of succeeding addressable units, that are not yet activated.

18. Use of an addressing device of one of the claims 1 to 13 or 16 to 17, for data recognition in a monitoring device, wherein, by means of multiple information sources in addressable units, an array of data is obtained, that is representative for the area to be monitored, and where the data are the physical information to be monitored, or the physical information to be monitored is derived from said data.

19. Use as set forth in claim 18, wherein the area to be monitored is a machine, a vehicle, terrain, a human body or animal body or a general measurement area, and where the measured data are temperature, pressure, chemical concentration, electric events, or a general physical information to be monitored.

20. Use as set forth in claim 18 or 19, for fire protection, surveillance of machine functions or of human or animal or related organisms.

## Revendications

1. Arrangement d'adressage comprenant un câble avec au moins un conducteur d'adressage (2) connectée à un générateur d'adresse (43), a au moins un conducteur de données (1), et au moins un conducteur d'alimentation qui peut ou non être combine avec ledit conducteur de données, connectant mutuellement de multiples unités adressables (14) qui sont connectées au conducteur de données (1) ou lesdites unités adressables (14) comprennent des moyens de commutation qui sont commutables indépendamment les uns des autres par un détecteur d'adressage (12) présent dans toutes les unités adressables, caractérisé en ce que
chaque unité adressable (14) peut être dans un état normal, dans un état activé, et dans un état inactivé,
le générateur d'adresse (43) est conçu pour émettre un signal standardisé (SS1) qui comprend un paramètre de signal détectable par toutes unités adressables,
les détecteurs d'adressage (12) de l'unité adressable (14) recevant le paramètre de signal, comprennent des moyens pour la détection de ces paramètres de signal, et ou ce paramètre de signal détecté est interprétable comme étant le signal d'adressage prévu pour cette unité adressable,
des moyens (13) sont prévus dans chaque unité adressable pour activer l'unité adressable, par laquelle activation de l'unité adressable après la détection du paramètre de signal, une source ou un consommateur de données (6) est connectable avec le conducteur de données (1),
des moyens (26) sont prévus à chaque unité adressable pour la maintenir dans son état actif pour un certain laps de temps après activation, et pour la désactiver en séparant la source ou le consommateur des données (6) du conducteur de données (1),
chaque unité adressable comprend des membres à impédance variable (7) qui fournissent une impédance aux états activés et normaux de l'unité adressable qui se distingue de l'impédance dans son état inactivé,
par l'augmentation de l'impédance des membres d'impédance (7) de l'unité adressable activée (n-1), la somme de l'impédance du câble entre le générateur d'adresse (43) et l'unité adressable (n) prévue pour la prochaine activation, qui suit la dernière unité adressable (n-1) activée, et de l'impédance de cette unité adressable (n) prévu pour l'activation prochaine, est plus grand que la somme de l'impédance du câble entre le générateur d'adresse (43) et l'unité adressable (n+1) suivant l'unité adressable (n) prévue pour l'activation suivante, et de l'impédance de cette prochaine unité adressable (n+1), et ou la différence entre lesdites sommes est suffisamment grande, pour recevoir le paramètre de signal dans l'unité d'adressage (n) prévue pour l'activation prochaine, qui suit l'unité addressable, en quantité suffisante, et dans l'unité adressable suivante (n+1) en état suffisamment atténué, pour prévoir la détection du paramètre de signal dans l'unité adressable (n) prévu pour l'activation prochaine, et pour éviter le détection du paramètre de signal dans l'unité adressable (n+1) suivante.

2. Arrangement d'adressage selon la revendication 1, où les membres à impédance variable contiennent un membre à impédance (7) situé entre le conducteur d'adresse et le conducteur de masse, et ou avant et durant l'activation de l'unité adressable ces membres à impédance sont connectés avec le conducteur d'adresse et avec le conducteur de masse, et ou le membre à impédance est déconnectable du conducteur d'adresse et/ou du conducteur de masse quand l'unité adressable est inactivée, augmentant ainsi le total de l'impédance de la section du câble situé entre le générateur d'adresse et l'unité adressable, qui suit l'unité adressable venant d'être activée.

3. Arrangement selon la revendication 2, ou chaque unité adressable comprend un premier moyen de commutation (8) pour la connexion et la séparation de l'élément d'impédance (7) avec le conducteur d'adresse (20), et un second moyen de commutation (13) pour la connexion et la séparation d'une source de signal ou d'un consommateur d'un signal (6) avec le conducteur de données (1).

4. Arrangement selon la revendication 3, ou après la détection du paramètre de signal dans une unité adressable particulière, le premier moyen de commutation de cette unité adressable est ouvert, et le second moyen de commutation (13) est fermé, et, après expiration d'un délai prévu pour la transmission de l'information, est rouvert.

5. Arrangement selon la revendication 4, où le délai est productible par un générateur de délai qui comprend l'élément d'impédance (7).

6. Arrangement selon une des revendications 1 à 5, où le premier moyen de commutation (8) comprend une entrée de contrôle ou un générateur de délai (26) est connecté pour accomplir l'ouverture retardée du commutateur après détection du paramètre du signal standardisé.

7. Arrangement selon une des revendications 1 à 6, où le générateur d'adresse (43) est prévu pour l'émission d'un signal standardisé avec des valeurs croissantes d'une propriété électrique comprenant le paramètre destiné à la réception par les détecteurs d'adressage (12), et où les détecteurs d'adressage interprètent la détection du paramètre de la propriété électrique reçue comme étant le signal d'adressage prévu pour cette unité adressable.

8. Arrangement selon une des revendications 1 à 7, où chaque unité adressable (14) comprend un circuit d'initialisation (15) pour l'amener dans un état normal, qui est l'état après application de la tension d'alimentation, dans lequel le premier moyen de commutation (8) est fermé, et le second moyen de commutation (13) est ouvert.

9. Arrangement selon une des revendications 1 à 8, où le conducteur d'adresse (20) du câble est interrompu à chaque unité adressable (14), pour l'insertion d'un élément d'impédance (110) en connexion de série.

10. Arrangement selon une des revendications 1 à 9, où le détecteur d'adressage (12) dispose d'une sortie (24) où un signal "strobe" est disponible, qui change l'état quand le détecteur d'adressage (12) détecte le signal standardisé.

11. Arrangement selon une des revendications 1 à 10, où au moins une partie des unités adressables (14) comprennent au moins un capteur (6) qui convertit une information mesurable physiquement en un signal mesuré qui peut être transmis à travers le conducteur de données (1), et où au moins une source de courant (9) est contrôlée de préférence par le capteur (6) pour émettre un signal modulé en courant, lequel est proportionnel à la valeur mesurée.

12. Arrangement selon une des revendications 1 à 11, où au moins une partie des unités adressables (14) comprennent au moins une unité adressable (106) destinée à sortir l'information.

13. Arrangement selon une des revendications 1 à 12, où au moyen des informations sortis d'une unité adressable (14) une connexion (29) avec le conducteur d'adressage (2) d'un second arrangement contrôlé par un processeur en tête de câble (104), est ouvert ou fermé.

14. Unité adressable pour la réalisation d'un arrangement d'adressage selon une des revendications 1 à 13, caractérisée par
- un premier moyen de commutation (8) entre une entrée d'alimentation et/ou d'adressage et un élément d'impédance (7) lequel moyen de commutation est fermé par un signal d'initialisation,
- un second moyen de commutation normalement ouvert (13) entre une source d'information ou un récepteur d'information comprise dans l'unité adressable, et une entrée ou sortie, et
- un détecteur d'adressage (12) qui ouvre ce premier moyen de commutation (8) et fermé et le second moyen de commutation (13) pour un certain laps de temps après détection d'un signal d'adressage.

15. Méthode pour adresser plusieurs unités adressables d'un arrangement adressable connectées par un câble en série avec un générateur d'adresse (43) selon l'une des revendications 1 à 13, qui comprend les pas de
- la mise en état de toutes les unités adressables par un signal d'initialisation dans un état, ou ils sont connectés au connecteur d'alimentation et ou ils sont empêchés de transmettre de l'information,
- la production d'une série de signaux d'adressage transmis au câble, à l'aide du générateur d'adresses,
- l'activation de la première unité adressable par un premier signal d'adressage durant un certain laps de temps pour la transmission d'information,
- la désactivation de cette unité adressable après finition de ladite transmission d'information de telle sorte que la totalité de l'impédance du segment du câble entre le générateur d'adresse et l'unité adressable suivant l'unité adressable désactivée, ait suffisamment augmenté pour que, lorsqu'un nouveau signal standardisé est envoyé, un paramètre de ce signal standardisé soit détectable seulement par cette unité d'adressage suivante et
- ensuite de la mise en état pour un temps limité de l'unité adressable suivante après reconnaissance du signal standardisé pour la transmission d'information, à la fin de laquelle elle est inactivée et le paramètre du signal standardisé suivant est détectable au travers de l'impédance totale incrémentée à l'endroit de cette unité adressable et où l'augmentation de l'impédance totale du segment de câble entre le générateur d'adresse et l'unité adressable, qui suit l'unité adressable venant d'être inactivée est accomplie par l'ouverture du premier moyen de commutation qui connecte le conducteur d'adresse conduisant le signal standardisé avec l'élément d'impédance, ceci augmentant la propriété électrique contenant le paramètre reçu par l'unité adressable qui suit l'unité adressable venant d'être inactivée.

16. Arrangement d'adressage selon l'une des revendications 1 à 13, où le laps de temps durant lequel l'unité adressable est maintenue dans un état activé est déterminé par la durée de transmission du signal standardisé après détection du paramètre, ou par le signal standardisé chargeant une capacité qui se décharge par une résistance dûment dimensionnée.

17. Arrangement d'adressage selon l'une des revendications 1 à 13 ou 16, où l'impédance entre le conducteur d'adressage et le conducteur de masse entre deux unités adressables se succédant sont dimensionnées de telle sorte que l'impédance totale de la section du câble après l'unité adressable activée ne dépend pas du nombre des unités adressables se succédant, qui ne sont pas encore activées.

18. Utilisation d'un arrangement d'adressage selon l'une des revendications 1 à 13 ou 16 à 17, pour la reconnaissance de données par un système de surveillance, où par la multitude de sources d'informations contenues dans les unités adressables, une série de données est obtenue, qui est représentative de la surface à surveiller, et où les données sont des informations physiques des données à surveiller, ou les informations physiques à surveiller sont dérivées des données précitées.

19. Utilisation selon la revendication 18, où le champ de surveillance est une machine, un véhicule, un terrain, un corps humain ou animal ou une surface de mesure générale, et où les données de mesure sont une température, une pression, une concentration chimique, des phénomènes électriques, ou une information physique générale devant être surveillée.

20. Utilisation selon la revendication 18 ou 19, pour la protection incendie, la surveillance du fonctionnement des machines ou des organismes humains, animales ou semblables.
